# EUROPEAN PATENT SPECIFICATION

(11) **EP 3 155 258 B1**
(45) Date of publication and mention of the grant of the patent: **15.01.2020**
(21) Application number: 15729795.3
(22) Date of filing: 11.06.2015
(51) Int. Cl.: F03D 1/06

(54) **A TIP SYSTEM FOR A WIND TURBINE BLADE**
SPITZENSYSTEM FÜR EINE WINDTURBINENSCHAUFEL
SYSTÈME D'EXTRÉMITÉ DE PALE D'UNE TURBINE ÉOLIENNE

(30) Priority: 11.06.2014 GB 201410429
(43) Date of publication of application: 19.04.2017
(73) Proprietor: LM WP Patent Holding A/S, 6000 Kolding (DK)
(72) Inventor: DOBBE, Antonius, Cornelis, NL-1764 GB Breezand (Noord-Holland) (NL); SCHURING, Roelof, Willem, NL-7531 HV Enschede (Overijssel) (NL); BAKKUM, Maurits, Chrstiaan, NL-1827 AH Alkmaar (Noord-Holland) (NL); BENSSOUSSAN, Régis, Jaques, NL-1705 ST Heerhugowaard (Noord-Holland) (NL); ALKEMADE, Harry, NL-1761 VB Anna Paulowna (Noord-Holland) (NL)
(74) Representative: COPA Copenhagen Patents
(86) International application number: PCT/EP2015/063079
(87) International publication number: WO 2015/189338

(56) References cited:
- EP-A2- 2 634 417
- US-A1- 2006 127 222
- US-A1- 2010 132 884
- US-A1- 2010 143 062

## Description

### Field of the Invention

The present invention relates to a tip system for a wind turbine blade, and associated methods of manufacture and assembly.

### Background of the Invention

To improve adaptability and manufacturability of wind turbine blades, blades can be provided in modular form, having for example a separate tip section from a mainboard and/or root section.

EP2634417A2 describes blade inserts that can be inserted between blade segments to make the resulting wind turbine blade longer.

US2006/127222 describes the assembly of tip- and mainboard segments of wind turbine blades using connecting elements.

US2010/132884 describes the assembly of blade segments by insertion of spar cap segments into each other and filling a resulting gap with adhesive.

US2010/143062 describes a system for transporting and aligning a two-part wind turbine blade.

It is an object of the invention to provide improved designs of modular wind turbine blade designs.

### Summary of the Invention

The invention relates to a method of manufacturing a wind turbine blade by joining a tip section of the blade and a mainboard section of the blade at a joining section, wherein
- the tip section comprises a first aerodynamic shell with a first load-carrying principal laminate integrated in the first aerodynamic shell, and
- the mainboard section comprising a second aerodynamic shell with a second load-carrying principal laminate integrated in the second aerodynamic shell, wherein
- the joining section is formed at a first end of the tip section and a second end of the mainboard section, wherein the method comprises the steps of:
   a) forming the tip section such that the first load-carrying principal laminate includes a first recess at the first end of the tip section, the first recess comprising a first taper section where a thickness of the first load-carrying principal laminate is tapered in thickness towards the first end of the tip section,
   b) forming the mainboard section such that the second load-carrying principal laminate includes a second recess at the second end of the mainboard section, the second recess comprising a second taper section where a thickness of the second load-carrying principal laminate is tapered in thickness towards the second end of the mainboard section,
   c) positioning the tip section and the mainboard section in longitudinal extension of each other such that the first recess and the second recess are aligned with each other at the joining section,
   d) arranging a first layup in the first recess and the second recess and
   e) joining said first layup to the first recess and the second recess such that a first scarf joint is formed between the first layup and the first taper section and the second taper section.

Furthermore, joining step e) comprises wetting a fibre material with resin and curing said resin, said fibre material being dry fibre material infused with resin in an infusion process, such as a vacuum assisted infusion process.

The present manufacturing method forms a robust and durable joint between the mainboard and tip sections of a modular wind turbine blade. The method introduces no extra loads or stresses in the load carrying structure, whereby the method provides a blade of a durability and quality equaling a common non-modular wind turbine blade. Further, the method provides the opportunity to shape the layup such that the intended aerodynamic surface may be achieved and a smooth transition from the tip section to the mainboard section may be achieved.

In an embodiment of the invention the method further comprising the steps of
a1) forming the tip section to also comprise, at the first end, a first leading edge recess in a first leading edge laminate and a first trailing edge recess in a first trailing edge laminate, the first leading edge recess comprising a first leading edge taper section where a thickness of the first leading edge laminate is tapered in thickness towards the first end and the first trailing edge recess comprising a first trailing edge taper section where a thickness of the first trailing edge laminate is tapered in thickness towards the first end,
b1) forming the mainboard section to also comprise, at the second end, a second leading edge recess in a second leading edge laminate and a second trailing edge recess in a second trailing edge laminate, the second leading edge recess comprising a second leading edge taper section where a thickness of the second leading edge laminate is tapered in thickness towards the second end and the second trailing edge recess comprising a second trailing edge taper section where a thickness of the second trailing edge laminate is tapered in thickness towards the second end,
d1) arranging a second layup in the first leading edge recess and in the second leading edge recess,
d2) arranging a third layup in the first trailing edge recess and in the second trailing edge recess,
e1) joining said second layup to the first leading edge recess and the second leading edge recess such that a second scarf joint is formed between the second layup and the first leading edge taper section and the second leading edge taper section
e2) joining said third layup to the first trailing edge recess and the second trailing edge recess such that a third scarf joint is formed between the third layup and the first trailing edge taper section and the second trailing edge taper section.

It may be beneficial to also join the mainboard- and tip sections at the leading edge and trailing edge of the blade using scarf joints in the local laminates to provide an advantageous structurally integrated wind turbine blade.

In some embodiments it may be advantageous to have fibres from the principal load carrying laminates and/or from the leading edge- and trailing edge laminates of the tip section and mainboard section respectively protruding into the recesses and into the layups, whereby particularly strong integration of the lay ups with the mainboard - and tip sections may be achieved.

For example, parts of fibre plies comprised in the principal load carrying laminate of the mainboard section may protrude at the taper section and into the air in the recess. These protruding fibre material can then be firmly integrated to a dry fibre layup, becoming an integral part of the layup, and after infusion with resin, a particularly strong connection may be formed. Of course such protruding fibre material may be provided in all tapering sections, partly pre-filling the recess.

According to further embodiments of the invention the second layup and the third layup, is/are selected from the group consisting of a fibre material, a resin, a pre-formed part, an adhesive, a pre-preg material, a pre-cured element or any combination thereof.

The layup material for attachment to the recesses in the laminate(s) of the tip section and of the mainboard section may be varied for different reasons, including price, production speed, ease of handling and complexity of arranging such layups.

It may be beneficial to have one or more layups comprised in a preformed part. According to this embodiment, the preformed part may be arranged to attached to the recesses by gluing. The joint may be further strengthened, for example, by overlaminating, so that at least the principal main laminates of the tip- and mainboard sections, that is, the first principal main laminate and the second principal main laminate, and optionally also the leading edge laminates of the tip- and mainboard sections as well as the trailing edge laminates of the tip- and mainboard sections, are overlaminated at predesigned positions in the shell attachment element. Further, the overlamination may form the outer surface of the blade and thus provide a smooth aerodynamic surface.

In an embodiment of the invention said first recess, said second recess, said first leading edge recess, said second leading edge recess, said first trailing edge recess and said second trailing edge recess overlap to form a single recess around the circumference of the tip section and the mainboard section.

It may be advantageous to arrange one or more layups around the whole circumference of the two sections, respectively, to achieve a substantially continuous scarf joint around the circumference of the wind turbine blade.

In further embodiments of the invention the joining steps e1) and e2), comprise
wetting a fibre material with resin and curing said resin, said fibre material being a pre-preg material and/or dry fibre material which then is infused with resin in an infusion process, such as a vacuum assisted infusion process.

A very versatile and advantageous embodiment is achieved when joining the tip section with the motherboard section using fibre material very similar or substantially identical to the fibre material already comprised in the principal load carrying laminates.

The fibre material may be a pre-preg material which is cured, e.g. by heating, after arranging one or more layers in the recesses. The fibre material may also be plies of dry fibre, which, after arranging them in the recesses, are infused with resin and cured.

When a vacuum assisted infusion process is used in these embodiments, a particularly advantageous embodiment has been achieved.

It is also possible to combine pre-preg material with dry fibre material in the recesses.

According to embodiments of the invention the joining steps e1) and e2), comprise gluing a pre-cured element or a pre-formed part to the first leading edge recess and to the second leading edge recess, and/or to the first trailing edge recess and to the second trailing edge recess. It may be advantageous to use pre-formed parts glued into the recesses. This may be comparatively easy to handle. Furthermore, the quality of the pre-formed part may be assessed prior to arranging them in the recesses, making this option advantageous with respect to quality control.

It may also be possible to glue pre-formed parts into the recesses, still leaving som space for overlamination with dry fibre and resin and/or pre-preg material.

According to embodiments of the invention the joining section has a length of 1 - 5 m in the longitudinal direction. To obtain a strong enough joint between the tip section and the mainboard section, the joining section may need to have a minimum length.

According to embodiments of the invention the width of the joining section is between 0.5m and the total width of the blade from a leading edge to a trailing edge.

According to further embodiments of the invention the taper has a depth to length ratio of between 1 to 30 and 1 to 2.

According to an embodiment of the invention the ratio of the length of the tip section to the length of the mainboard section is between 1 to 8 and 1 to 1, preferably between 1 to 4 and 1 to 2.

The invention also relates to a wind turbine blade formed by joining a tip section and a mainboard section by the method of claim 1.

### Description of the Invention

Embodiments of the invention will now be described, by way of example only, with reference to the accompanying drawings, in which:
Fig. 1 shows a wind turbine;
Fig. 2 shows a schematic view of a wind turbine blade according to the invention;
Fig. 3 shows a schematic view of an airfoil profile of the blade of Fig. 2;
Fig. 4 shows a schematic view of the wind turbine blade of Fig. 2, seen from above and from the side; and
Figs. 5-24 illustrate various embodiments of tip section construction and tip system connections, according to the invention.

It will be understood that elements common to the different embodiments of the invention have been provided with the same reference numerals in the drawings.

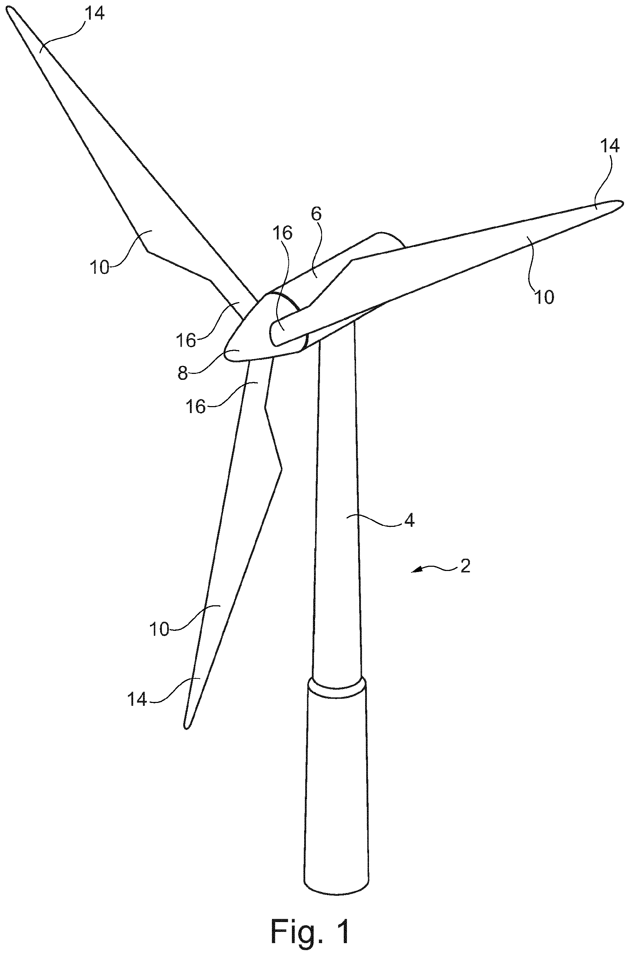

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

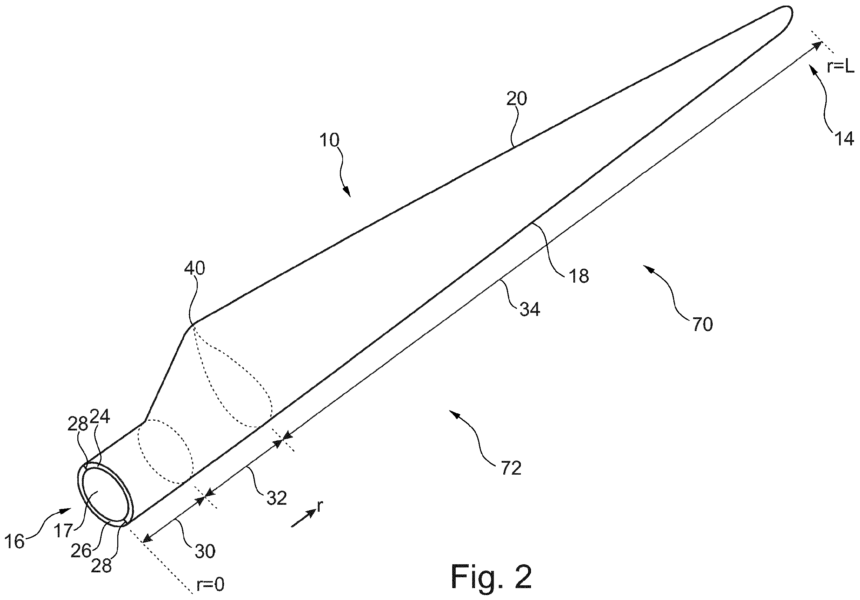

Fig. 2 shows a schematic view of a wind turbine blade 10. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape 40 of the root region 30 to the airfoil profile 50 of the airfoil region 34. The chord length of the transition region 32 typically increases substantially linearly with increasing distance *r* from the hub.

The airfoil region 34 has an airfoil profile 50 with a chord extending between the leading edge 18 and the trailing edge 20 of the blade 10. The width of the chord decreases with increasing distance *r* from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

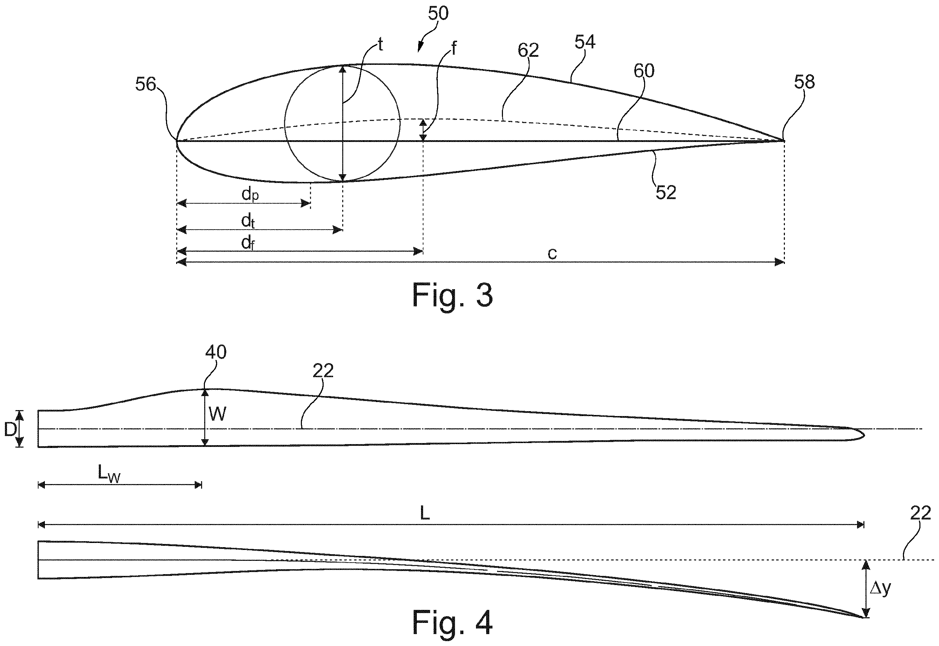

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade, known as the a chordwise direction. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length *c,* the maximum camber *f,* the position *d_{f}* of the maximum camber *f,* the maximum airfoil thickness *t,* which is the largest diameter of the inscribed circles along the median camber line 62, the position *dₜ* of the maximum thickness *t,* and a nose radius (not shown). These parameters are typically defined as ratios to the chord length *c.* Thus, a local relative blade thickness *t*/*c* is given as the ratio between the local maximum thickness *t* and the local chord length *c.* Further, the position *dₚ* of the maximum pressure side camber may be used as a design parameter, and of course also the position of the maximum suction side camber.

Fig. 4 shows some other geometric parameters of the blade. The blade has a total blade length *L,* which is defined along the spanwise direction of the blade. As shown in Fig. 2, the root end is located at position *r* = 0, and the tip end located at *r* = *L*. The shoulder 40 of the blade is located at a position *r* = *L_{w},* and has a shoulder width *W,* which equals the chord length at the shoulder 40. The diameter of the root is defined as *D.* Further, the blade is provided with a prebend, which is defined as *Δy,* which corresponds to the out of plane deflection from a pitch axis 22 of the blade.

The wind turbine blade 10 generally comprises a shell made of fibre-reinforced polymer, and is typically made as a pressure side or upwind shell part 24 and a suction side or downwind shell part 26 that are glued together along bond lines 28 extending along the trailing edge 20 and the leading edge 18 of the blade 10. Wind turbine blades are generally formed from fibre-reinforced plastics material, e.g. glass fibres and/or carbon fibres which are arranged in a mould and cured with a resin to form a solid structure. Modern wind turbine blades can often be in excess of 30 or 40 metres in length, having blade root diameters of several metres. Wind turbine blades are generally designed for relatively long lifetimes and to withstand considerable structural and dynamic loading.

With reference to Fig. 2, according to the invention the wind turbine blade is initially provided in at least two sections - at least a first section towards the tip end 14 of the blade 10, the tip end section indicated generally at 70, and at least a section comprising the root end 16 of the blade 10, herein referred to as the mainboard section 72. The separate sections 70,72 can be joined together to form at least a portion of the wind turbine blade 10.

Preferably, the connection between the sections 70,72 must be light weight and durable. While Fig. 4 shows a pre-bent blade, it will be understood that no pre-bend is necessary in the tip section 70. Preferably, the tip section 70 comprises 1/6th to 1/4th of the total blade length.

Preferably, the tip section 70 can be provided in a variety of different lengths and geometries, to allow for scalability of design.

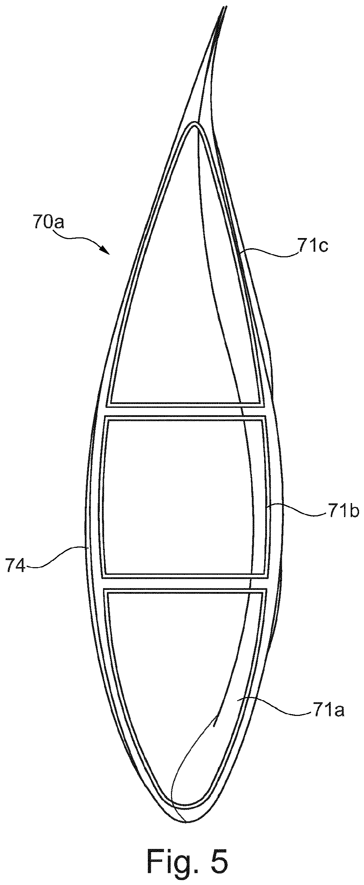

With reference to Fig. 5, a first example of a tip system for a wind turbine blade is shown, showing a tip section 70a looking from the root-end-side of the tip section towards the tip end 14.

In this embodiment, the tip section 70a comprises three cores arranged to form a leading edge portion 71a, a trailing edge portion 71b, and a main laminate portion 71c. The core portions 71a,71b,71c are preferably three hollow braided infused cores, further preferably with pultruded profiles at the leading edge, trailing edge, and/or main laminate sections of the respective cores 71a,71b,71c.

The cores 71a,71b,71c may comprise Glass Fibre Reinforced Polymer (GFRP), but it will be understood that carbon fibres may additionally or alternatively be used.

The cores 71a,71b,71c can be positioned together to effectively form a mandrel or forming core, to which skin layers, which may comprise layers of glass and/or carbon fibre material, can be applied to or braided around.

The package, including the cores 71a,71b,71c and the skin layers 74, may be placed within a mould to form the desired shape of the tip section 70. The package can then be infused with a resin and cured to form the tip section 70. Preferably, the package is infused in a one-shot moulding process. The skin layers 74 are preferably infused, but it will be understood that portions of the surfaces of the cores 71a,71b,71c may be infused with resin during the moulding process.

It will be understood that the cores 71a,71b,71c may be formed on members (not shown) which may be retained in position within the interior of the cores 71a,71b,71c before and/or during the infusion process, and removed thereafter. The members may comprise relatively rigid elements, flexible filling material and/or inflatable elements for ease of removal.

This embodiment provides a relatively light-weight tip section 70 which is relatively easy to manufacture, and may be suitable for automation. The tip section 70 comprises no adhesive bond lines, and accordingly eliminates the possibility of bond line failure in the tip section 70, while reducing the weight of the tip section 70. Scalability may be provided by simply lengthening tools used to form the core sections 71a,71b,71c

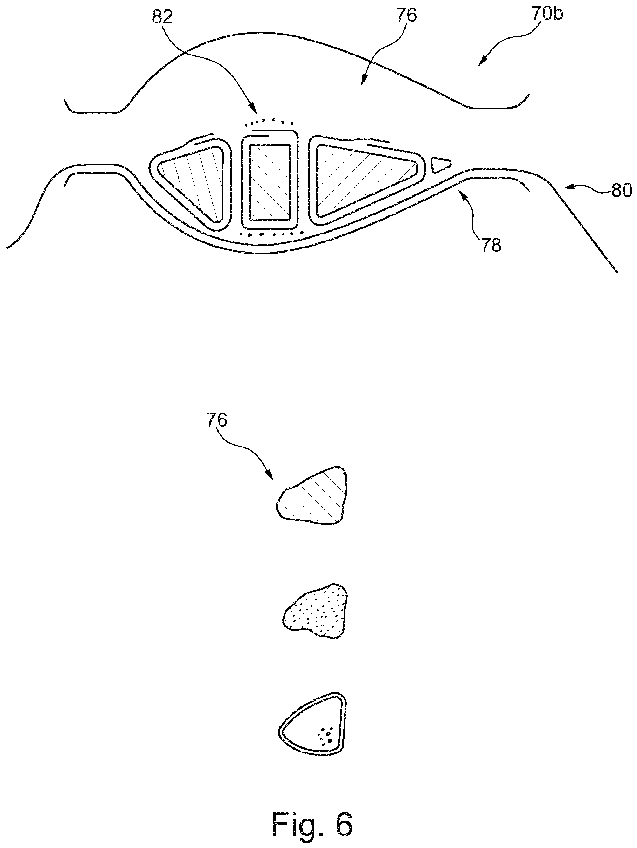

A similar embodiment is indicated in Fig. 6, wherein a tip section 70b is shown looking from the root-end-side of the tip section towards the tip end 14.

In this embodiment, in contrast to the embodiment of Fig. 5, three non-hollow cores 76 are used to form the tip section 70b. As indicated in Fig. 6, the cores 76 may be formed from a solid material, may comprise a vacuumised solid to form a core structure (e.g. grains), and/or may comprise a foam core provided with a sealing foil (e.g. to prevent the ingress of resin).

The cores 76 may be arranged in a mould 78, preferably on top of at least one layer of fibre material, e.g. biax fibre material 80. Additional layers of fibre material may be provided adjacent the cores 76, e.g. unidirectional fibres 82 positioned beneath and on top of the cores 76 in the region of the main laminate portion of the tip section 70b. Further layers of fibre material (not shown) may be positioned on top of the cores 76 in the mould 78, before the mould 78 is closed and the fibre material infused with resin to form the tip section 70b.

Due to the use of non-hollow cores 76, it may be possible to reduce or eliminate the use of pultruded reinforcement elements in the tip section 70b, and/or to reduce or eliminate the use of separate forming members to form the initial cores.

It will be understood that the features of the embodiments of Figs. 5 and 6 may be combined in a hybrid embodiment, e.g. wherein a portion of a tip section comprises non-hollow core sections and a portion comprises hollow core sections.

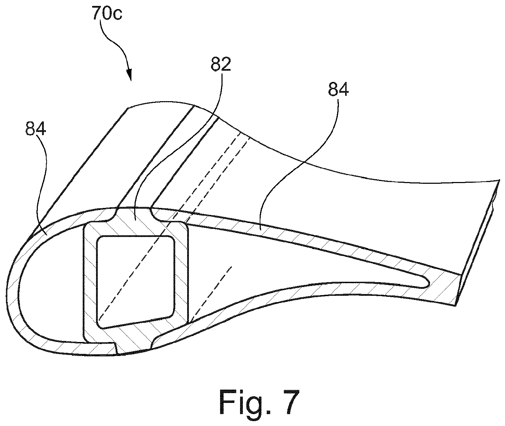

A further embodiment of a tip section 70c according to the invention is shown in Fig. 7, wherein the tip section 70c comprises a central load-bearing section 82, preferably a load bearing beam or spar box, wherein non-load-carrying shape pieces 84 can be provided at the leading edge and/or the trailing edge of the tip section 70c. In the embodiment of Fig. 7, the tip section 70c is formed wherein non-load-carrying shape pieces 84 are attached at the leading edge and trailing edge sides of the load-bearing section 82, such that a portion of the load-bearing section 82 is exposed on the surface of the tip section 70c. However, it will be understood that the non-load-carrying shape pieces 84 may alternatively be attached to the load-bearing section 82 wherein the non-load-carrying shape pieces 84 form a shell substantially around the entire load-bearing section 82, which is located in the interior of the tip section 70c.

The non-load-carrying shape pieces 84 may be attached to the load-bearing section 82 using any suitable connection, e.g. adhesive bonding or bonding via resin infusion joint, mechanical connectors, e.g. bolting, riveting.

This embodiment provides several advantages. In a first aspect, the joint between components is not located at the leading edge or trailing edge, and accordingly may only experience loading due to aerodynamic forces. Furthermore, the load concentrations and load path can be easily calculated using the central load-bearing section 82, which can easily be designed as appropriate. The load-bearing section 82 may be manufactured using any suitable manufacturing process, and can be relatively easily scaled as desired.

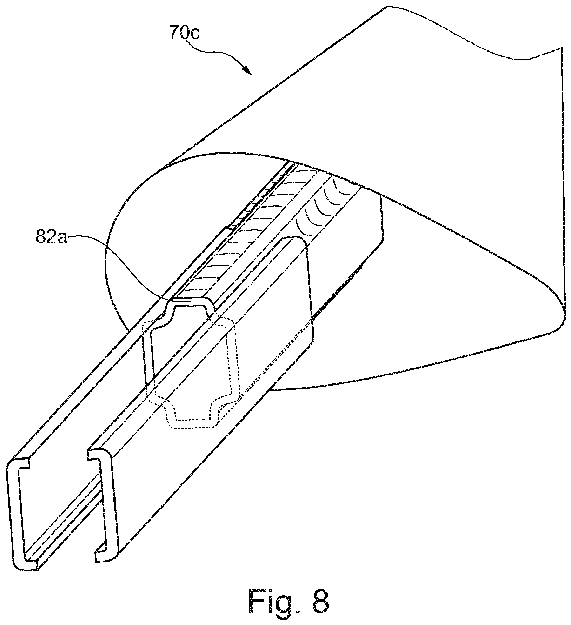

With reference to Fig. 8, an embodiment of a tip section connection according to the invention is illustrated for the embodiment of Fig. 7. In this figure, the central load-bearing section 82 extends from the tip section 70c to provide a connection member 82a, which can be received within an open end (not shown) of a mainboard section 72 of a sectional blade 10. The connection member 82a may be received within and connected to an appropriate portion of the mainboard section 72, e.g. internal shear webs, a spar box or beam, etc. (as illustrated in outline in Fig. 8).

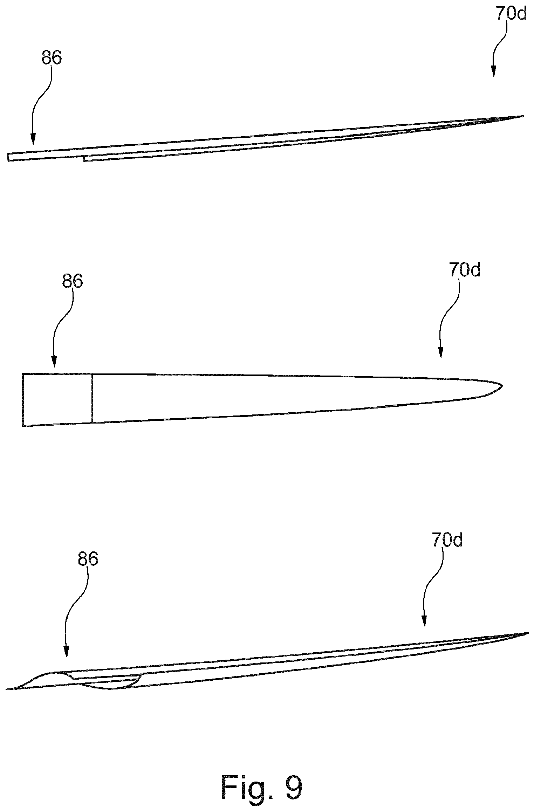

An alternative embodiment of a tip section connection is illustrated in Fig. 9. In this embodiment, a tip section 70d is provided wherein a section 86 of the external surface of the section, e.g. on the upwind or downwind side of the tip section, is longer in the spanwise direction towards the root end 16 of the blade 10 than the opposite surface. E.g. the upwind side 86 may be 1-2 metres longer in the spanwise direction than the downwind side.

Similarly, in the mainboard section (not shown) the side on the opposed surface to the projecting side 86 of the tip section 70d extends longer in the spanwise direction towards the tip end 14 of the blade 10.

This may be accomplished by extending the main laminate part of the corresponding projecting sections of the tip section and the mainboard section of the blade 10 by corresponding distances to create a stepped transition between the sections at the interface between sections.

Accordingly, the tip section 70d may be joined to the mainboard section by connecting the projecting portion of the tip section 70d with the projecting portion of the mainboard section. It will be understood that the sections may be joined using any suitable connection, as described above. Preferably, adhesive is applied along at least a portion of the interface between the sections, e.g. along bond lines provided at the edges of the surfaces of the shells of the projecting portions. Additionally or alternatively, the sections may be joined using overlamination between components.

A connection between the sections over a spanwise distance, e.g. at least 1-2 meters, can provide for a smooth transfer of loads between the blade sections. In addition, a relatively large glue area between sections can more easily distribute the shear forces involved in the structure. Furthermore, the configuration provides relatively easy access to glue surfaces before the tip section 70d is joined with the mainboard section.

In this embodiment, the mainboard section 72 may be provided with a relatively low pre-bend, wherein the tip section 70d may have a relatively larger pre-bend.

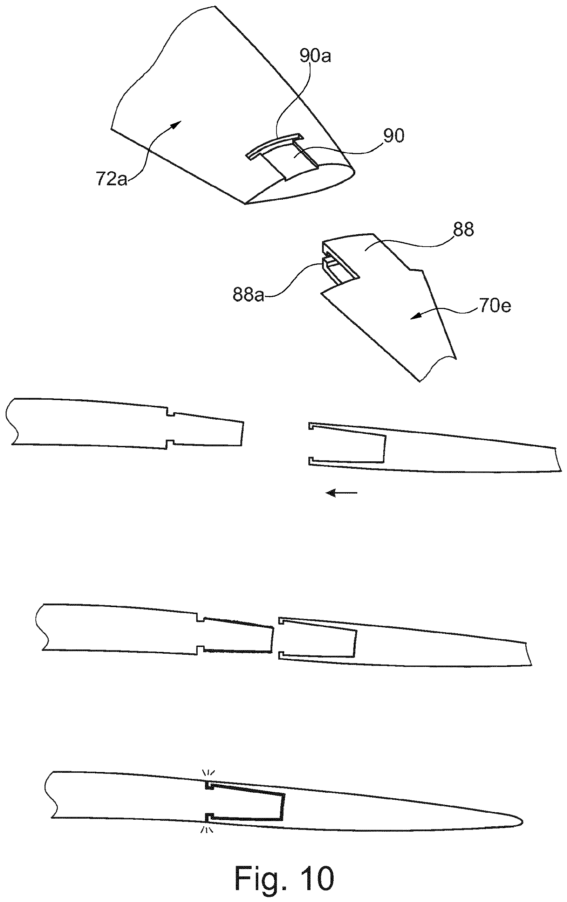

In Fig. 10, a further embodiment of a tip section connection is shown. In this embodiment, upper and lower projecting elements 88 project from opposite surfaces of the tip section 70e. The projecting elements 88 comprise inwardly-facing gripper arms 88a. Correspondingly, the mainboard section 72a comprises receiving channels 90 defined on external surfaces of the mainboard section 72a at opposed sides of the mainboard section 72a, the receiving channels 90 extending in a substantially spanwise direction from the tip-end-side of the mainboard section 72a. The length of the projecting elements 88 in the spanwise direction is substantially the same as the length of the receiving channels 90 in the spanwise direction.

Coupling grooves 90a are provided at the opposite ends of the receiving channels 90 from the tip-end-side of the mainboard section 72a, the coupling grooves 90a having a greater depth than the adjacent receiving channels 90. The coupling grooves 90a extend in a direction substantially transverse to the spanwise direction.

For coupling of the tip section 70e and the mainboard section 72a, adhesive may be applied in the receiving channels 90 and/or on the internal surfaces of the projecting elements 88. The projecting elements 88 are received within the receiving channels 90 as the tip section 70e is moved towards the mainboard section 72a, wherein the projecting elements 88 may be deflected as the gripper arms 88a contact the surface of the receiving channels 90. Once the gripper arms 88a reach the end of the receiving channels 90, the arms 88a snap into the coupling grooves 90a at the end of the channels 90 to provide a mechanical connection between the sections 70e,72a.

The tip section 70e can then be further secured to the mainboard section 72a by the curing of suitable adhesive, and/or further mechanical connections, e.g. bolting, riveting, overlamination, etc.

Optionally, and as shown in Fig. 10, the coupling grooves 90a may extend by a length which is greater than the width of the receiving channels 90, for example so that a visual inspection of the presence of adhesive between the arms 88a and the grooves 90a may be performed after coupling.

While in Fig. 10, adhesive is applied between the coupling sections of the tip system, additionally or alternatively, adhesive may be applied at the interface between the sections 70e,72a after the arms 88a are received within the grooves 90a, e.g. through appropriate inlets (not shown) provided in the system, and/or through the sides of the coupling grooves 90a (which may be wider than the projecting elements, as described above).

While Fig. 10 shows the projecting elements 88 projecting from the tip section 70e and received on the mainboard section 72a, it will be understood that additionally or alternatively the projecting elements 88 may project from the mainboard section to be received on the tip section in appropriate channels and grooves.

Additionally or alternatively, while the embodiment of Fig. 10 shows the receiving channels 90 defined on an external surface of the blade section with the projecting elements 88 having inwardly-facing gripper arms 88a, it will be understood that the tip system connection may at least partially be defined on the interior of a blade, wherein at least one receiving channel and coupling groove is defined on an internal surface of a tip or mainboard section, and a corresponding projecting element comprises an outwardly-facing gripper arm.

Furthermore, while the gripper arms 88a and the coupling grooves 90a are shown as substantially straight elements, it will be understood that the arms 88a and/or grooves 90a may have any suitable profiles to provide for improved performance of the connection, e.g. a saw-tooth or dimpled profile. Additionally or alternatively, the projecting elements 88 and/or the receiving channels 90 may have appropriate profiling, e.g. to ensure that a minimum bond line distance is maintained between bond surfaces - corrugation, dimpling, etc.

This embodiment provides a resilient connection system, which can provide for improved quality control, as the connection between sections can be confirmed by a visual inspection of the insertion of the gripper arms into the coupling grooves, and/or an aural indication of the coupling via a "click" sound formed by the snapping of the arms 88a into the coupling grooves 90a.

In addition, while the embodiment of Fig. 10 shows a single coupling groove 90a provided at the end of the receiving channel 90, it will be understood that a plurality of coupling grooves may be provided along the length of the channel 90, wherein the length by which the projecting elements 88 are received within the channel may be varied. In this regard, the grooves and arms may be arranged as a ratchet system within the channel, e.g. a one-way ratchet system.

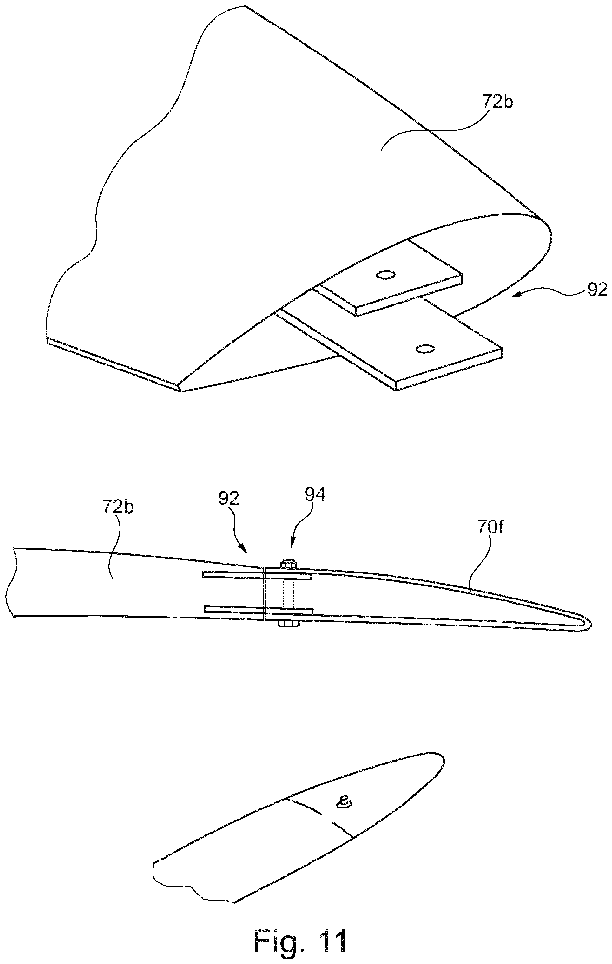

With reference to Fig. 11, a further embodiment of a tip section connection is shown. In this embodiment, a pair of coupling elements 92, for example steel plates, project from an open end of a mainboard section 72b of a blade 10. A hollow tip section 70f may be positioned over the coupling elements 92, wherein apertures defined on the tip section 70f are aligned with corresponding apertures on the coupling elements 92. Accordingly, the tip section 70e may be mechanically attached to the coupling elements 92, e.g. via a nut-and-bolt connection 94. Appropriate other connections may also be used in addition or as an alternative to the nut-and-bolt connection, e.g. adhesive connections. In addition, the steel plates of Fig. 11 may be replaced by any other material, e.g. composite material, fibre-reinforced composite material. It will be understood that the configuration of connection system may be additionally or alternatively implemented on the opposite sections, e.g. the coupling elements 92 provided extending from a tip section.

In this case, as the coupling elements 92 and the connection 94 may be provided as conductive metallic elements, they may be coupled with the lightning protection system of the blade 10, e.g. the connection 94 may be provided as a lightning receptor for the blade 10.

This embodiment provides a relatively simple and straightforward connections system, which can easily be implemented in existing blade manufacturing systems.

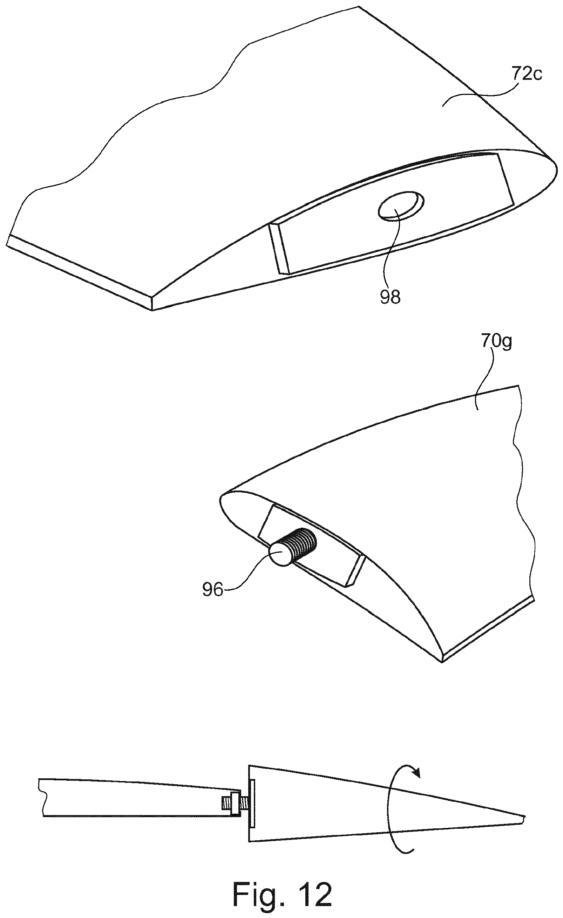

With reference to Fig. 12, a further embodiment of a tip section connection is shown. In this embodiment, a screw thread connection is provided between blade sections, wherein a threaded pin 96 projects from either a tip section or a mainboard section, wherein the threaded pin 96 is arranged to be received within a threaded hole 98 provided in the other of the sections, such that the tip section 70g may be relatively easily screwed onto the mainboard section 72c, for a robust connection between the elements. This connection may optionally be supplemented by adhesive applied at the interface between sections after the screwing operation has been completed, to improve the bonding between components.

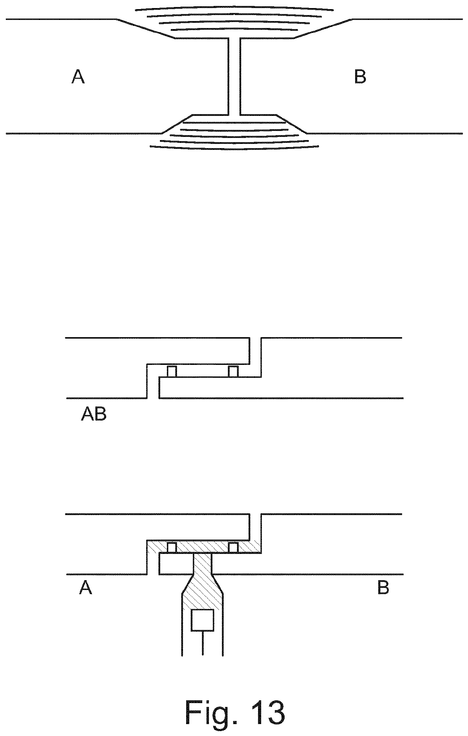

With reference to Fig. 13, examples of possible tip connections are shown between blade sections A and B. In a first aspect, blade sections A and B may be positioned adjacent one another, wherein a channel is defined at the interface between blade sections, and wherein a scarf joint may be formed between the sections by laying up fibre material in the channel and infusing the fibre material with a resin, e.g. vinyl ester resin, to bond the blade sections together.

In a second aspect, spacers may be used at the interface between blade sections A and B, wherein the spacers act to set a bondline thickness between components. An adhesive or resin can be supplied to the interface to bond the sections together with an appropriate bondline thickness guaranteed.

While the embodiments have been shown with a longitudinally extending bondline, it is also possible to utilise a scarf joint or a double-scarf joint to form the interface. The joint may be formed directly between load-carrying structures of the two parts, e.g. between principal laminates of the two parts being integrated in the shell of said parts.

It will be understood that any of the features of the above embodiments may be used in combination with the features of any of the other embodiments presented above.

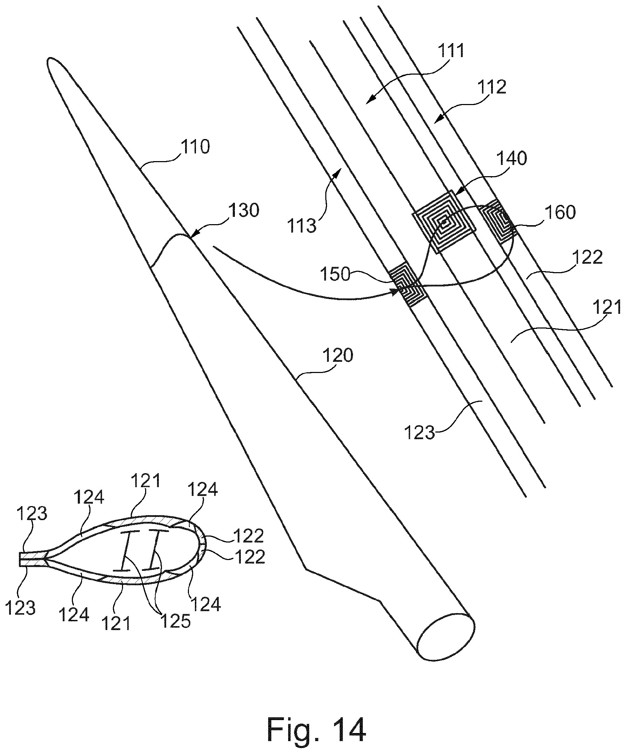

Fig. 14 illustrates a wind turbine blade according to the invention and a method of manufacturing or assembling such a wind turbine blade according to the invention. The figure illustrates a wind turbine blade, which comprises a tip section 110 and a mainboard section 120, which are assembled at a joining section 130. The tip section 110 and the mainboard section 120 both comprise an aerodynamic shell, which includes a pressure side (or upwind side) shell part and a suction side (or downwind side) shell part.

The figure also illustrates a schematic view of a cross-section of the mainboard section 120. The mainboard section comprises an aerodynamic shell with load-carrying principal laminates 121 integrated in the pressure side shell part and suction side shell part, respectively, the principal laminates forming spar caps. The aerodynamic shell may further as illustrated comprise load-carrying leading edge laminate(s) 122 and a load-carrying trailing edge laminate(s) 123. Further, the blade may comprise sandwich constructions 124 comprising a sandwich core material between fibre skins and arranged between the various load-carrying structures 121, 122, 123. The blade further comprises shear webs 125 that are connected internally in the blade between the principal laminates 121.

The tip section 110 is formed similar to the mainboard section, i.e. with load-carrying principal laminates 111 integrated in the aerodynamic shell and optionally a load-carrying leading edge laminate 112 and a load-carrying trailing edge laminate 113.

The tip section 110 and the mainboard section 120 are as illustrated connected to each other at the joining section 130 via a first layup 140 or insert forming a first scarf joint connecting the load-carrying principal laminates 111, 121 of the tip section and the mainboard section, respectively, a leading edge layup 150 or insert forming a leading edge scarf joint connecting the load-carrying leading edge laminates 112, 122 of the tip section and the mainboard section, respectively, and a trailing edge layup 140 or insert forming a trailing edge scarf joint connecting the load-carrying trailing edge laminates 113, 123 of the tip section and the mainboard section, respectively.

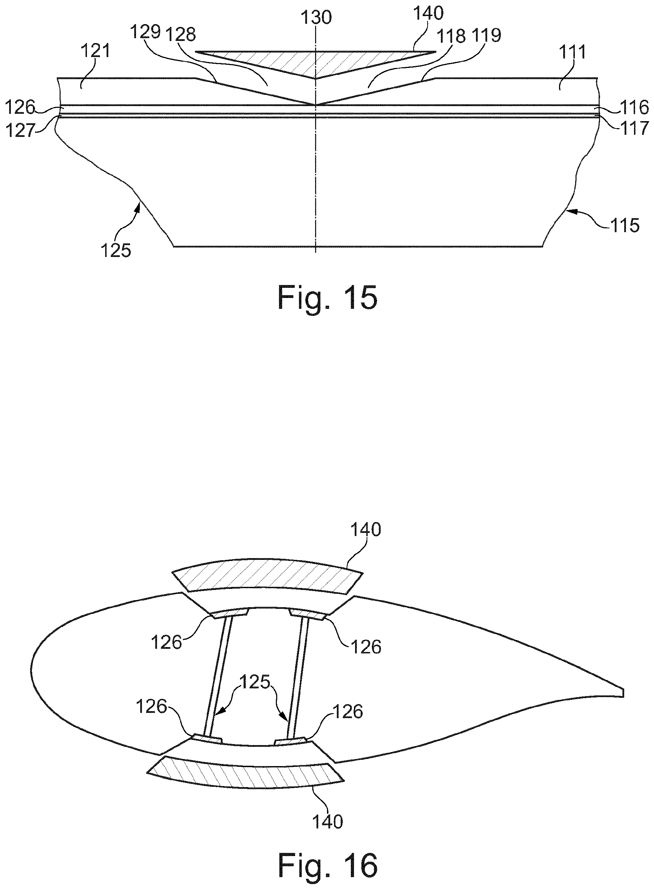

Fig. 15 schematically shows a longitudinal cross-sectional view of a part of the blade. The tip section 110 as previously mentioned comprises a load-carrying principal laminate 111 and a shear web 115 having a shear web flange 117 being bonded to the principal laminate 111 via an adhesive bond line 116. Equivalently, the mainboard section 120 as previously mentioned comprises a load-carrying principal laminate 121 and a shear web 125 having a shear web flange 127 being bonded to the principal laminate 121 via an adhesive bond line 126.

It is seen that the tip section 110 is formed such that the load-carrying principal laminate 111 comprises a recess 118 at the end facing the joining section 130, wherein the recess 118 comprises a taper section 119, where a thickness of the principal laminate 111 is tapered towards said end of the tip section 110. Similarly, the mainboard section 120 is formed such that the load-carrying principal laminate 121 comprises a recess 128 at the end facing the joining section 130, wherein the recess 128 comprises a taper section 129, where a thickness of the principal laminate 121 is tapered towards said end of the mainboard section 120.

The scarf joint is formed by a layup 140 that is arranged in the recesses 118, 128 and which is arranged to abut the taper section 119 of the principal laminate 111 of the tip section 110 and the taper section 129 of the principal laminate 121 of the tip section 120. Thereby, the layup forms a first scarf joint part to the tip section 110 and a second scarf joint part to the mainboard section 120.

Fig. 16 shows a cross-sectional view through the wind turbine blade. In addition to the features shown in Figs. 14 and 15, the figure merely illustrates that the recesses and the joining layups advantageously also may be tapered in the transverse direction of the blade.

The taper sections ensure that a strong assembly is achieved without any stiffness transitions. Further, the method provides a simple method of applying the layup to assemble the wind turbine blade and at the same time achieving a smooth aerodynamic finish between the tip section and the mainboard section of the blade.

In general, it is recognised that the load-carrying laminates are formed by fibre-reinforced laminates that comprises a plurality of fibre-reinforcement layers, often comprising 10-50 or 20-50 fibre-reinforcement layers. The taper sections may be formed by arranging ends of the fibre-reinforcement layers in a tapered arrangement. The individual layers may be arranged as ply-drops such that a step-wise taper is achieved in order to form a stepped scarf joint surface, or the individual layers may be cut taperingly in order to form a smooth scarf joint surface. The taper sections may also be formed by a post-moulding operation, e.g. by grinding the end surface in order to form a taper section.

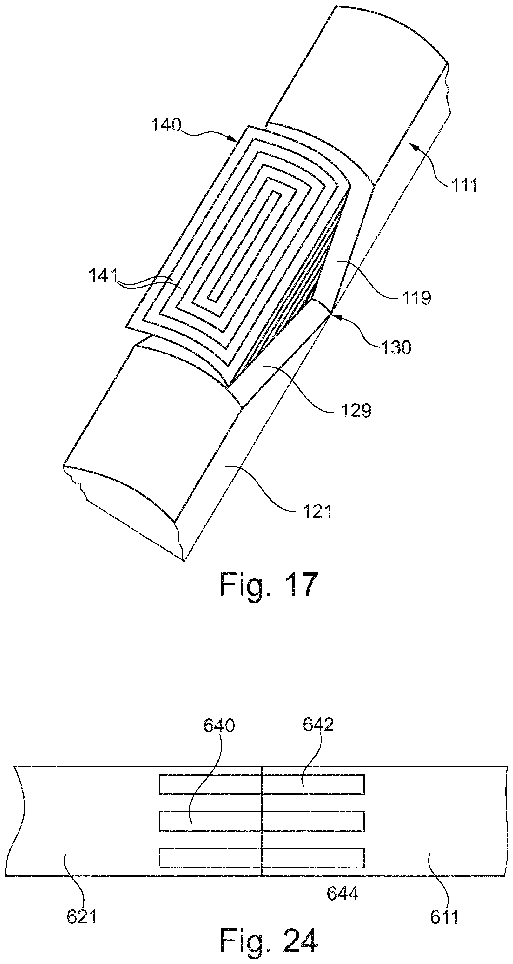

Fig. 17 illustrates on embodiment for arranging the layup 140 in the recesses of the principal laminate 111, 121. The layup 140 comprises a number of fibre plies 141. The fibre plies 141 may be arranged individually to form the layup 140. Alternatively, the layup 140 may be provided as a pre-form comprising the fibre plies 14, e.g. connected via stiching, a tackifier or the like, or as a pre-cured element, which is adhesively bonded in the recesses.

Figs. 15-17 have been illustrated for the main layup 140 only. However, it is clear that similar layups may be provided for attaching the leading edge laminates and the trailing edge laminates.

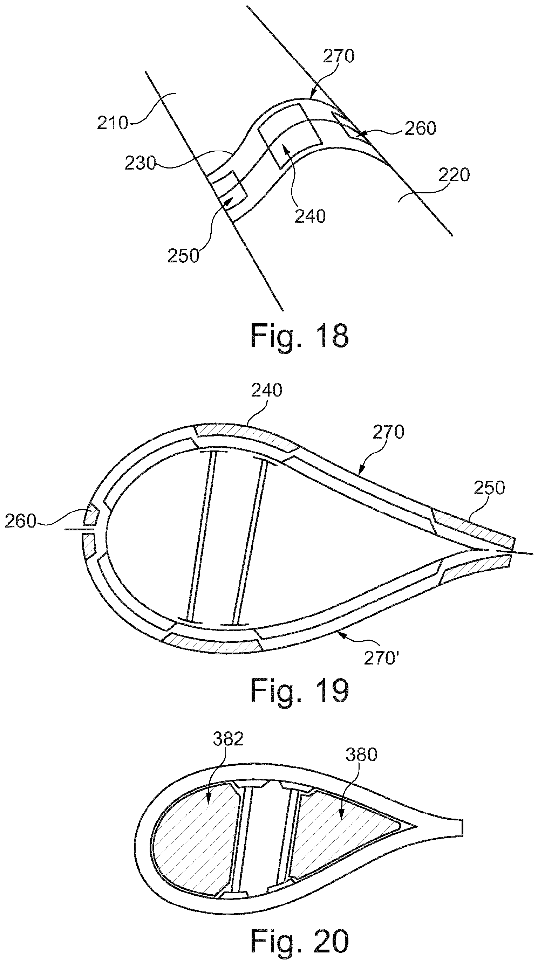

Figs. 18 and 19 illustrate another way of assembling a wind turbine blade by connecting a tip section 210 and a mainboard section 220 at a joining section 230. In the illustrated method, a circumferentially extending attachment part 270 comprising a first layup 240, a second layup 250, and a third layup 260 is arranged in one step in order to connect the tip section 210 and the mainboard section 220. The circumferentially extending attachment part 270 is shaped such that the first layup is arranged in the recesses of the load-carrying principal laminates, the second layup 250 is arranged in recesses of the trailing edge laminates, and the third layup 260 is arranged in recesses of the leading edge laminates.

The circumferentially extending attachment part 270 may partly or wholly be formed as a pre-shaped or pre-cured solid part. It may for instance be possible to provide the parts that connect the layups 240, 250, 260 as solid parts and let layups be provided as wet or dry fibre-reinforcement material. However, it is also possible to form the circumferentially extending attachment part 270 as a preform, where the layups 240, 250, 260 are arranged on a backing scrim or layer. The backing scrim may form the outer surface of the joining section, or alternatively an over-lamination may be carried out in order to form the outer surface. The backing scrim or over-lamination layer may for instance be made of a biaxial fibre-reinforcement layer.

The circumferentially extending attachment may be formed as a single piece extending all the way around the blade, or alternatively it may as illustrated in Fig. 19 be formed by a first attachment part 270 and a second attachment part 270' for connecting the suction side and the pressure side of the blade, respectively.

In the embodiments shown in Fig. 14-19, the tip section and the mainboard section have been connected by joining the load-carrying structures of the blade shells. However, it is also advantageous to connect the sandwich construction parts of the blades, e.g. by adhesively bonding the sandwich constructions parts via a butt joint or a scarf joint. However, it may in some circumstances be difficult to connect the sandwich construction parts. Therefore, it may be advantageous to close off the ends of the tip section and the mainboard section, respectively, by use of bulkheads. This may for instance as illustrated in Fig. 20 be carried out by arranging a trailing edge bulkhead 380 and a trailing edge bulkhead 382. Due to the connection between the principal laminates of the tip section and the mainboard section, it is not necessary to provide a bulkhead between the shear webs. However, it is of course possible to provide an additional bulkhead between the shear webs or to provide a single bulkhead extending in the entire cross-section of the blade section.

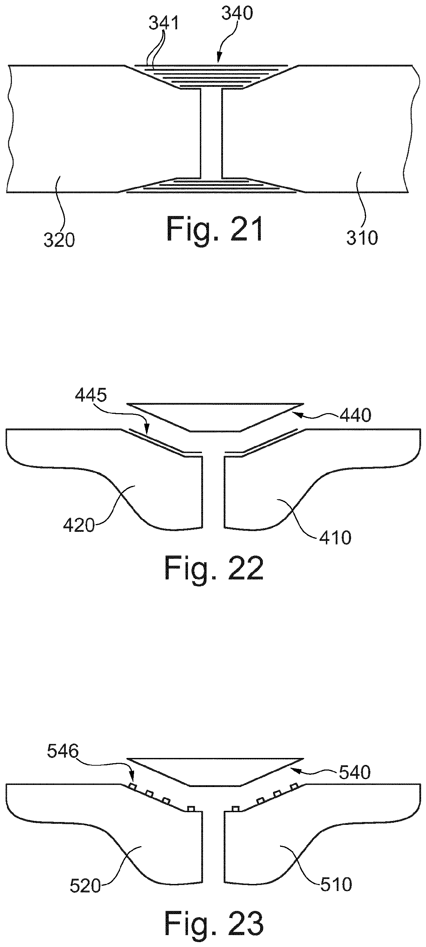

As previously mentioned, it is possible to provide the layup and scarf joints in a number of different ways. In a first highly advantageous method illustrated schematically in Fig. 21, a tip section 310 and a mainboard section 320 are assembled by arranging layups 340 comprising a plurality of fibre plies 341 in recesses formed in the load-carrying principal laminates. The layup 340 may be provided as a wet layup, i.e. as pre-pregs, or it may be provided as dry fibre-reinforcement material, or a combination thereof. It may be necessary to add additional resin to the dry fibre material or pre-preg material, and said resin is subsequently cured or hardened in order to form a composite scarf joint. The resin may be applied by hand lamination or by forming a mould cavity, e.g. by arranging a vacuum foil across the recesses and layup and injecting a resin.

In a second method illustrated in Fig. 22, a layup 440 in form of a pre-formed or premoulded solid piece is utilised to connect a tip section 410 and a mainboard section 420. The layup 440 is adhered to recesses of the load-carrying principal laminates by using an adhesive or alternatively or addition thereto a pre-wetted or saturated interface ply 445. The layup 440 may be held in place with a clamping device to ensure correct geometry and placement.

In a third method illustrated in Fig. 23, a layup 540 in form of a pre-formed or premoulded solid piece is utilised to connect a tip section 510 and a mainboard section 520. The recesses of the load-carrying laminates (or alternatively the layup 540) are provided with spacers to provide a correct bondline thickness and channels between the recess and the layup 540. Thus, a cavity and channels are formed such that an adhesive may flow in said cavity. The adhesive may thus be injected into the cavity, e.g. from one end, and once a flow front reaches the other end, the injection may be stopped.

In the previously described embodiments, the connections between the tip section and the mainboard section have been provided by a single set of recesses in load-carrying laminates and a single layup only. However, it is also possible to establish the connection by providing a plurality of sets of recesses and mating layups, e.g. two or three, in the various load-carrying laminates. Fig. 24 shows an example of such an embodiment illustrating a load-carrying principal laminate 611 of the tip section and a load-carrying principal laminate 621 of the mainboard section. In the shown embodiment, three longitudinally extending recesses are formed and aligned at the end section of the principal laminates 611, 621, and a first layup 640, a second layup 642, and third layup 644 are arranged in said recesses. Accordingly, the connection between the tip section and the mainboard section may be formed partly by for instance direct butt joints and intermediate scarf joints formed via said layups 640, 642, 644.

The invention is not limited to the embodiments described herein, and may be modified or adapted without departing from the scope of the present invention, which is defined by the appended claims.

## Claims

1. A method of manufacturing a wind turbine blade by joining a tip section (110) of the blade and a mainboard section (120) of the blade at a joining section (130), wherein
- the tip section (110) comprises a first aerodynamic shell with a first load-carrying principal laminate (111) integrated in the first aerodynamic shell, and
- the mainboard section (120) comprising a second aerodynamic shell with a second load-carrying principal laminate (121) integrated in the second aerodynamic shell, wherein
- the joining section (130) is formed at a first end of the tip section and a second end of the mainboard section, wherein the method comprises the steps of:
a) forming the tip section (110) such that the first load-carrying principal laminate (111) includes a first recess (118) at the first end of the tip section, the first recess comprising a first taper section (119) where a thickness of the first load-carrying principal laminate is tapered in thickness towards the first end of the tip section,
b) forming the mainboard section (120) such that the second load-carrying principal laminate (121) includes a second recess (128) at the second end of the mainboard section, the second recess comprising a second taper section (129) where a thickness of the second load-carrying principal laminate is tapered in thickness towards the second end of the mainboard section,
c) positioning the tip section (110) and the mainboard section (120) in longitudinal extension of each other such that the first recess and the second recess are aligned with each other at the joining section (130),
d) arranging a first layup (140) in the first recess and the second recess and
e) joining said first layup to the first recess and the second recess such that a first scarf joint is formed between the first layup and the first taper section and the second taper section, **characterized in that** joining step e) comprises wetting a fibre material with resin and curing said resin, said fibre material being dry fibre material infused with resin in an infusion process, such as a vacuum assisted infusion process.

2. Method according to claim 1, said method further comprising the steps of
a1) forming the tip section to also comprise, at the first end, a first leading edge recess in a first leading edge laminate and a first trailing edge recess in a first trailing edge laminate, the first leading edge recess comprising a first leading edge taper section where a thickness of the first leading edge laminate is tapered in thickness towards the first end and the first trailing edge recess comprising a first trailing edge taper section where a thickness of the first trailing edge laminate is tapered in thickness towards the first end,
b1) forming the mainboard section to also comprise, at the second end, a second leading edge recess in a second leading edge laminate and a second trailing edge recess in a second trailing edge laminate, the second leading edge recess comprising a second leading edge taper section where a thickness of the second leading edge laminate is tapered in thickness towards the second end and the second trailing edge recess comprising a second trailing edge taper section where a thickness of the second trailing edge laminate is tapered in thickness towards the second end,
d1) arranging a second layup in the first leading edge recess and in the second leading edge recess,
d2) arranging a third layup in the first trailing edge recess and in the second trailing edge recess,
e1) joining said second layup to the first leading edge recess and the second leading edge recess such that a second scarf joint is formed between the second layup and the first leading edge taper section and the second leading edge taper section, and
e2) joining said third layup to the first trailing edge recess and the second trailing edge recess such that a third scarf joint is formed between the third layup and the first trailing edge taper section and the second trailing edge taper section.

3. Method according to claim 2, wherein the second layup and the third layup, is selected from the group consisting of
a fibre material, a resin, a pre-formed part, an adhesive, a pre-preg material, a pre-cured element or any combination thereof.

4. Method according to any of the claims 2 - 3, wherein said first recess, said second recess, said first leading edge recess, said second leading edge recess, said first trailing edge recess and said second trailing edge recess overlap to form a single recess around the circumference of the wind turbine blade.

5. Method according to any of the claims 2 - 4, wherein joining steps e1) and e2), comprise
wetting a fibre material with resin and curing said resin, said fibre material being a pre-preg material and/or dry fibre material infused with resin in an infusion process, such as a vacuum assisted infusion process.

6. Method according to any of the claims 2 -4, wherein joining steps e1) and e2), comprise
gluing a pre-cured element or a pre-formed part to the first recess and the second recess, optionally to the first leading edge recess and to the second leading edge recess, and/or to the first trailing edge recess and to the second trailing edge recess.

7. Method according to any of the claims 1 - 6, wherein the joining section has a length of 1 - 5 m in the longitudinal direction.

8. Method according to any of the claims 1 - 7, wherein the width of the joining section is between 0.5m and the total width of the blade from a leading edge to a trailing edge.

9. Method according to any of the claims 1 - 8, wherein the taper has a depth to length ratio of between 1 to 30 and 1 to 2.

10. Method according to any of the claims 1 - 9, wherein the ration of the length of the tip section to the length of the mainboard section is between 1 to 8 and 1 to 1, preferably between 1 to 4 and 1 to 2.

11. A wind turbine blade formed by joining a tip section and a mainboard section by the method of claim 1.

## Patentansprüche

1. Verfahren zum Herstellen eines Windkraftanlagenflügels durch Verbinden eines Spitzenabschnitts (110) des Flügels und eines Mainboard-Abschnitts (120) des Flügels an einem Verbindungsabschnitt (130), wobei
- der Spitzenabschnitt (110) eine erste aerodynamische Schale mit einem in die erste aerodynamische Schale integrierten ersten lasttragenden Hauptlaminat (111) umfasst, und
- der Mainboard-Abschnitt (120) eine zweite aerodynamische Schale mit einem in die zweite aerodynamische Schale integrierten zweiten lasttragenden Hauptlaminat (121) umfasst, wobei
- der Verbindungsabschnitt (130) an einem ersten Ende des Spitzenabschnitts und einem zweiten Ende des Mainboard-Abschnitts gebildet ist, wobei das Verfahren folgende Schritte umfasst:
a) Bilden des Spitzenabschnitts (110) derart, dass das erste lasttragende Hauptlaminat (111) eine erste Aussparung (118) an dem ersten Ende des Spitzenabschnitts umfasst, wobei die erste Aussparung einen ersten Schrägenabschnitt (119) umfasst, wo eine Dicke des ersten lasttragenden Hauptlaminats in der Dicke in Richtung des ersten Endes des Spitzenabschnitts abgeschrägt ist,
b) Bilden des Mainboard-Abschnitts (120) derart, dass das zweite lasttragende Hauptlaminat (121) eine zweite Aussparung (128) an dem zweiten Ende des Mainboard-Abschnitts umfasst, wobei die zweite Aussparung einen zweiten Schrägenabschnitt (129) umfasst, wo eine Dicke des zweiten lasttragenden Hauptlaminats in der Dicke in Richtung des zweiten Endes des Mainboard-Abschnitts abgeschrägt ist,
c) Positionieren des Spitzenabschnitts (110) und des Mainboard-Abschnitts (120) in Längsverlängerung voneinander, sodass die erste Aussparung und die zweite Aussparung an dem Verbindungsabschnitt (130) aufeinander ausgerichtet sind,
d) Anordnen einer ersten Schichtung (140) in der ersten Aussparung und der zweiten Aussparung, und
e) Verbinden der ersten Schichtung mit der ersten Aussparung und der zweiten Aussparung, sodass eine erste Laschenverbindung zwischen der ersten Schichtung und dem ersten Schrägenabschnitt und dem zweiten Schrägenabschnitt gebildet wird, **dadurch gekennzeichnet, dass** der Verbindungsschritt e) das Nässen eines Fasermaterials mit Harz und Aushärten des Harzes umfasst, wobei es sich bei dem Fasermaterial um in einem Infusionsprozess, wie etwa einem vakuumunterstützen Infusionsprozess, mit Harz infundiertes trockenes Fasermaterial handelt.

2. Verfahren nach Anspruch 1, wobei das Verfahren weiter folgende Schritte umfasst:
a1) Bilden des Spitzenabschnitts, um an dem ersten Ende außerdem eine erste Eintrittskantenaussparung in einem ersten Eintrittskantenlaminat und eine erste Austrittskantenaussparung in einem ersten Austrittskantenlaminat zu umfassen, wobei die erste Eintrittskantenaussparung einen ersten Eintrittskanten-Schrägenabschnitt umfasst, wo eine Dicke des ersten Eintrittskantenlaminats in der Dicke in Richtung des ersten Endes abgeschrägt ist, und die erste Austrittskantenaussparung einen ersten Austrittskanten-Schrägenabschnitt umfasst, wo eine Dicke des ersten Austrittskantenlaminats in der Dicke in Richtung des ersten Endes abgeschrägt ist,
b1) Bilden des Mainboard-Abschnitts, um an dem zweiten Ende außerdem eine zweite Eintrittskantenaussparung in einem zweiten Eintrittskantenlaminat und eine zweite Austrittskantenaussparung in einem zweiten Austrittskantenlaminat zu umfassen, wobei die zweite Eintrittskantenaussparung einen zweiten Eintrittskanten-Schrägenabschnitt umfasst, wo eine Dicke des zweiten Eintrittskantenlaminats in der Dicke in Richtung des zweiten Endes abgeschrägt ist, und die zweite Austrittskantenaussparung einen zweiten Austrittskanten-Schrägenabschnitt umfasst, wo eine Dicke des zweiten Austrittskantenlaminats in der Dicke in Richtung des zweiten Endes abgeschrägt ist,
d1) Anordnen einer zweiten Schichtung in der ersten Eintrittskantenaussparung und in der zweiten Eintrittskantenaussparung,
d2) Anordnen einer dritten Schichtung in der ersten Austrittskantenaussparung und in der zweiten Austrittskantenaussparung,
e1) Verbinden der zweiten Schichtung mit der ersten Eintrittskantenaussparung und der zweiten Eintrittskantenaussparung, sodass eine zweite Laschenverbindung zwischen der zweiten Schichtung und dem ersten Eintrittskanten-Schrägenabschnitt und dem zweiten Eintrittskanten-Schrägenabschnitt gebildet wird, und
e2) Verbinden der dritten Schichtung mit der ersten Austrittskantenaussparung und der zweiten Austrittskantenaussparung, sodass eine dritte Laschenverbindung zwischen der dritten Schichtung und dem ersten Austrittskanten-Schrägenabschnitt und dem zweiten Austrittskanten-Schrägenabschnitt gebildet wird.

3. Verfahren nach Anspruch 2, wobei die zweite Schichtung und die dritte Schichtung aus der Gruppe ausgewählt werden, die aus Folgendem besteht:
einem Fasermaterial, einem Harz, einem vorgeformten Teil, einem Klebstoff, einem Prepreg-Material, einem vorgehärteten Element oder einer beliebigen Kombination davon.

4. Verfahren nach einem der Ansprüche 2-3, wobei die erste Aussparung, die zweite Aussparung, die erste Eintrittskantenaussparung, die zweite Eintrittskantenaussparung, die erste Austrittskantenaussparung und die zweite Austrittskantenaussparung einander überlappen, um eine einzige Aussparung um den Umfang des Windkraftanlagenflügels zu bilden.

5. Verfahren nach einem der Ansprüche 2-4, wobei die Verbindungsschritte e1) und e2) Folgendes umfassen:
Nässen eines Fasermaterials mit Harz und Aushärten des Harzes, wobei es sich bei dem Fasermaterial um ein Prepreg-Material und/oder um in einem Infusionsprozess, wie etwa einem vakuumunterstützen Infusionsprozess, mit Harz infundiertes trockenes Fasermaterial handelt.

6. Verfahren nach einem der Ansprüche 2-4, wobei die Verbindungsschritte e1) und e2) Folgendes umfassen:
Kleben eines vorgehärteten Elements oder eines vorgeformten Teils an die erste Aussparung und die zweite Aussparung, optional an die erste Eintrittskantenaussparung und an die zweite Eintrittskantenaussparung und/oder an die erste Austrittskantenaussparung und an die zweite Austrittskantenaussparung.

7. Verfahren nach einem der Ansprüche 1-6, wobei der Verbindungsabschnitt eine Länge von 1-5 m in der Längsrichtung aufweist.

8. Verfahren nach einem der Ansprüche 1-7, wobei die Breite des Verbindungsabschnitts zwischen 0,5 m und der Gesamtbreite des Flügels von einer Eintrittskante zu einer Austrittskante beträgt.

9. Verfahren nach einem der Ansprüche 1-8, wobei die Schräge ein Verhältnis der Tiefe zu der Länge von zwischen 1 zu 30 und 1 zu 2 aufweist.

10. Verfahren nach einem der Ansprüche 1-9, wobei das Verhältnis der Länge des Spitzenabschnitts zu der Länge des Mainboard-Abschnitts zwischen 1 zu 8 und 1 zu 1, vorzugsweise zwischen 1 zu 4 und 1 zu 2 beträgt.

11. Windkraftanlagenflügel, der durch Verbinden eines Spitzenabschnitts und eines Mainboard-Abschnitts mittels des Verfahrens von Anspruch 1 gebildet ist.

## Revendications

1. Procédé de fabrication d'une pale d'éolienne par l'assemblage d'une section de bout (110) de la pale et d'une section de plaque principale (120) de la pale au niveau d'une section d'assemblage (130), dans lequel
- la section de bout (110) comporte une première coque aérodynamique avec un premier stratifié principal porteur (111) intégré dans la première coque aérodynamique, et
- la section de plaque principale (120) comportant une deuxième coque aérodynamique avec un deuxième stratifié principal porteur (121) intégré dans la deuxième coque aérodynamique, dans lequel
- la section d'assemblage (130) est formée au niveau d'une première extrémité de la section de bout et d'une deuxième extrémité de la section de plaque principale, dans lequel le procédé comporte les étapes consistant à :
a) former la section de bout (110) de telle sorte que le premier stratifié principal porteur (111) comprend un premier évidement (118) au niveau de la première extrémité de la section de bout, le premier évidement comportant une première section effilée (119) où une épaisseur du premier stratifié principal porteur va en s'effilant dans le sens de l'épaisseur vers la première extrémité de la section de bout,
b) former la section de plaque principale (120) de telle sorte que le deuxième stratifié principal porteur (121) comprend un deuxième évidement (128) au niveau de la deuxième extrémité de la section de plaque principale, le deuxième évidement comportant une deuxième section effilée (129) où une épaisseur du deuxième stratifié principal porteur va en s'effilant dans le sens de l'épaisseur vers la deuxième extrémité de la section de plaque principale,
c) positionner la section de bout (110) et la section de plaque principale (120) en une extension longitudinale l'une par rapport à l'autre de telle sorte que le premier évidement et le deuxième évidement sont alignés l'un sur l'autre au niveau de la section d'assemblage (130),
d) agencer une première superposition de couches (140) dans le premier évidement et dans le deuxième évidement et
e) assembler ladite première superposition de couches sur le premier évidement et le deuxième évidement de telle sorte qu'un premier assemblage en biseau est formé entre la première superposition de couches et la première section effilée et la deuxième section effilée, **caractérisé en ce que** l'étape d'assemblage e) comporte les étapes consistant à mouiller un matériau fibreux avec de la résine et à faire durcir ladite résine, ledit matériau fibreux étant un matériau fibreux sec imprégné de résine dans un processus d'infusion, tel un processus d'infusion assisté par le vide.

2. Procédé selon la revendication 1, ledit procédé comportant par ailleurs les étapes consistant à
a1) former la section de bout pour également comporter, au niveau de la première extrémité, un premier évidement de bord d'attaque dans un premier stratifié de bord d'attaque et un premier évidement de bord de fuite dans un premier stratifié de bord de fuite, le premier évidement de bord d'attaque comportant une première section effilée de bord d'attaque où une épaisseur du premier stratifié de bord d'attaque va en s'effilant dans le sens de l'épaisseur vers la première extrémité et le premier évidement de bord de fuite comportant une première section effilée de bord de fuite où une épaisseur du premier stratifié de bord de fuite va en s'effilant dans le sens de l'épaisseur vers la première extrémité,
b1) former la section de plaque principale pour également comporter, au niveau de la deuxième extrémité, un deuxième évidement de bord d'attaque dans un deuxième stratifié de bord d'attaque et un deuxième évidement de bord de fuite dans un deuxième stratifié de bord de fuite, le deuxième évidement de bord d'attaque comportant une deuxième section effilée de bord d'attaque où une épaisseur du deuxième stratifié de bord d'attaque va en s'effilant dans le sens de l'épaisseur vers la deuxième extrémité et le deuxième évidement de bord de fuite comportant une deuxième section effilée de bord de fuite où une épaisseur du deuxième stratifié de bord de fuite va en s'effilant dans le sens de l'épaisseur vers la deuxième extrémité,
d1) agencer une deuxième superposition de couches dans le premier évidement de bord d'attaque et dans le deuxième évidement de bord d'attaque,
d2) agencer une troisième superposition de couches dans le premier évidement de bord de fuite et dans le deuxième évidement de bord de fuite,
e1) assembler ladite deuxième superposition de couches sur le premier évidement de bord d'attaque et le deuxième évidement de bord d'attaque de telle sorte qu'un deuxième assemblage en biseau est formé entre la deuxième superposition de couches et la première section effilée de bord d'attaque et la deuxième section effilée de bord d'attaque, et
e2) assembler ladite troisième superposition de couches sur le premier évidement de bord de fuite et le deuxième évidement de bord de fuite de telle sorte qu'un troisième assemblage en biseau est formé entre la troisième superposition de couches et la première section effilée de bord de fuite et la deuxième section effilée de bord de fuite.

3. Procédé selon la revendication 2, dans lequel la deuxième superposition de couches et la troisième superposition de couches sont sélectionnées dans le groupe constitué par un matériau fibreux, une résine, une partie préformée, un adhésif, un matériau pré-imprégné, un élément pré-durci ou une combinaison de ceux-ci.

4. Procédé selon l'une quelconque des revendications 2 à 3, dans lequel ledit premier évidement, ledit deuxième évidement, ledit premier évidement de bord d'attaque, ledit deuxième évidement de bord d'attaque, ledit premier évidement de bord de fuite et ledit deuxième évidement de bord de fuite se chevauchent pour former un seul évidement autour de la circonférence de la pale d'éolienne.

5. Procédé selon l'une quelconque des revendications 2 à 4, dans lequel les étapes d'assemblage e1) et e2) comportent les étapes consistant à mouiller un matériau fibreux avec de la résine et à faire durcir ladite résine, ledit matériau fibreux étant un matériau pré-imprégné et/ou un matériau fibreux sec imprégné de résine dans un processus d'infusion, tel un processus d'infusion assisté par le vide.

6. Procédé selon l'une quelconque des revendications 2 à 4, dans lequel les étapes d'assemblage e1) et e2) comportent l'étape consistant à coller un élément pré-durci ou une partie préformée sur le premier évidement et le deuxième évidement, éventuellement sur le premier évidement de bord d'attaque et sur le deuxième évidement de bord d'attaque, et/ou sur le premier évidement de bord de fuite et sur le deuxième évidement de bord de fuite.

7. Procédé selon l'une quelconque des revendications 1 à 6, dans lequel la section d'assemblage a une longueur de 1 à 5 m dans la direction longitudinale.

8. Procédé selon l'une quelconque des revendications 1 à 7, dans lequel la largeur de la section d'assemblage est entre 0,5 m et la largeur totale de la pale depuis un bord d'attaque jusqu'à un bord de fuite.

9. Procédé selon l'une quelconque des revendications 1 à 8, dans lequel la conicité a un rapport entre la profondeur et la longueur se trouvant entre 1/30 et 1/2.

10. Procédé selon l'une quelconque des revendications 1 à 9, dans lequel le rapport entre la longueur de la section de bout et la longueur de la section de plaque principale se trouve entre 1/8 et 1/1, de préférence entre 1/4 et 1/2.

11. Pale d'éolienne formée par l'assemblage d'une section de bout et d'une section de plaque principale par le procédé selon la revendication 1.
